# EUROPÄISCHE PATENTANMELDUNG

(11) **EP 3 610 978 A1**
(43) Veröffentlichungstag der Anmeldung: **19.02.2020**
(21) Anmeldenummer: 18188660.7
(22) Anmeldetag: 13.08.2018
(51) Int. Cl.: B23K 9/173, B23K 9/26, B23K 9/28, B23K 9/29

(54) **ZWEIDRAHTSCHWEISSBRENNER FÜR ZWEI ABSCHMELZENDE SCHWEISSDRÄHTE SOWIE EIN PAAR DÜSENSTOCKAUFNAHMEN FÜR EINEN SOLCHEN ZWEIDRAHTSCHWEISSBRENNER**

(71) Anmelder: FRONIUS INTERNATIONAL GmbH, 4643 Pettenbach (AT)
(72) Erfinder: GROSSAUER, Wolfgang, 4643 Pettenbach (AT)
(74) Vertreter: Sonn & Partner Patentanwälte

(57) **Zusammenfassung**

Die Erfindung betrifft einen Zweidrahtschweißbrenner (1) für zwei abschmelzende Schweißdrähte, mit einem Brennerkörper (4) mit einem Anschluss für ein Schlauchpaket und mit zwei Düsenstockaufnahmen (14, 15) zur Aufnahme jeweils von Düsenstöcken (7, 8) mit darin anordenbaren Kontaktrohren (9, 10) zur Führung der Schweißdrähte, und mit einer gemeinsamen Gasdüse (11) und Düsenstockaufnahmen-Paar (14, 15) für einen solchen Zweidrahtschweißbrenner (1). Der Brennerkörper (4) weist zwei Schnittstellen (12, 13) zur Aufnahme der Düsenstockaufnahmen (14, 15) auf, und weisen die Düsenstockaufnahmen (14, 15) jeweils eine Öffnung (16, 17) für die Aufnahme jeweils eines Düsenstocks (7, 8) auf, welche Öffnungen (16, 17) in einem Winkel zwischen 0° und 20° zueinander angeordnet sind, so dass die Mittelachsen der Kontaktrohre (9, 10) bzw. die darin verlaufenden Schweißdrähte zueinander diesen Winkel einschließen.

## Beschreibung

Die Erfindung betrifft einen Zweidrahtschweißbrenner für zwei abschmelzende Schweißdrähte, mit einem Brennerkörper mit einem Anschluss für ein Schlauchpaket und mit zwei Düsenstockaufnahmen zur Aufnahme jeweils von Düsenstöcken mit darin anordenbaren Kontaktrohren zur Führung der Schweißdrähte, und mit einer gemeinsamen Gasdüse.

Weiters betrifft die Erfindung ein Paar Düsenstockaufnahmen für einen solchen Zweidrahtschweißbrenner zur Aufnahme von Düsenstöcken mit darin anordenbaren Kontaktrohren zur Führung der Schweißdrähte.

Die vorliegende Beschreibung ist auf einen Zweidrahtschweißbrenner für zwei abschmelzende Schweißdrähte gerichtet. Eine Erweiterung auf einen Drei- oder Mehrdrahtschweißbrenner ist im Rahmen der Erfindung denkbar.

Derartige Zwei- oder Mehrdrahtschweißbrenner werden für Schweißaufgaben mit erhöhter Abschmelzleistung verwendet, um eine höhere Schweißgeschwindigkeit und damit eine erhöhte Produktivität zu erreichen. Dabei brennen zwischen zwei Schweißdrähten, welche durch zwei getrennte Kontaktrohre geführt werden, zwei elektrisch unabhängige Lichtbögen in einem gemeinsamen Schmelzbad. Durch die Zuführung zweier Schweißdrähte, welche aus dem selben oder auch aus unterschiedlichem Material und in gleichem oder unterschiedlichem Durchmesser vorliegen können, wird ein höheres Volumen an Zusatzmaterial, welches in den Spalt zwischen zwei zu verschweißende Werkstücke eingebracht oder auf das zu schweißende Werkstück aufgetragen wird, erzielt.

Beispielsweise beschreibt die US 2012/0055911 A1 (evtl. statt CN 103 801810 A anführen) einen Zweidrahtschweißbrenner der gegenständlichen Art, der sich durch besonders kompakte Bauweise auszeichnen soll.

Üblicherweise sind die Kontaktrohre zur Führung der Schweißdrähte fix parallel oder in einem vorgegebenen Winkel zueinander angeordnet. Wenn eine Schweißung mit einer anderen Stellung der Kontaktrohre zueinander durchgeführt werden soll, muss ein entsprechender dafür ausgelegter Schweißbrenner verwendet werden.

Die Aufgabe der Erfindung besteht in der Schaffung eines oben genannten Zweidrahtschweißbrenners sowie eines Paars Düsenstockaufnahmen für einen solchen Zweidrahtschweißbrenner, der eine Umrüstung auf unterschiedliche Ausrichtungen der Kontaktrohre bzw. Schweißdrähte zueinander in einfacher und kostengünstiger Weise zulässt. Nachteile bekannter Zweidrahtschweißbrenner sollen vermieden oder zumindest reduziert werden.

Gelöst wird die erfindungsgemäße Aufgabe durch einen Zweidrahtschweißbrenner, bei dem der Brennerkörper zwei Schnittstellen zur Aufnahme der Düsenstockaufnahmen aufweist, und die Düsenstockaufnahmen jeweils eine Öffnung für die Aufnahme jeweils eines Düsenstocks aufweisen, welche Öffnungen in einem Winkel zwischen 0° und 20° zueinander angeordnet sind, sodass die Mittelachsen der Kontaktrohre bzw. die darin verlaufenden Schweißdrähte zueinander diesen Winkel einschließen. Beim erfindungsgemäßen Zweidrahtschweißbrenner brauchen lediglich die Düsenstockaufnahmen, welche als Einsatz ausgebildet sind, ausgetauscht werden, um einen anderen Winkel der Kontaktrohre zueinander bzw. Schweißdrähte zueinander erzielen zu können. Der Wechsel ist relativ rasch und einfach durchführbar und die verschiedenen Düsenstockaufnahmepaare mit unterschiedlichen Winkeln der Öffnungen können sehr billig und einfach hergestellt werden. Für verschiedene Winkel der Kontaktrohre bzw. Schweißdrähte zueinander ist es nicht mehr notwendig, verschiedene Schweißbrenner bereitzustellen.

Vorteilhafterweise sind die Öffnungen der Düsenstockaufnahmen symmetrisch in einem Winkel zu einer Winkelsymmetralen zueinander orientiert. Bei diesem üblichen symmetrischen Aufbau des Schweißbrenners können die Düsenstockaufnahmen identisch aufgebaut und hergestellt sein und bloß spiegelverkehrt in den Schnittstellen des Zweidrahtschweißbrenners angeordnet werden.

Gemäß einem Merkmal der Erfindung sind mehrere Paare an Düsenstockaufnahmen mit unterschiedlichen Winkeln der Öffnungen zueinander vorgesehen, wobei der Winkel vorzugsweise 0°, 4°, 8° und 11,5° beträgt. Derartige Winkel haben sich für verschiedene Schweißanwendungen als besonders geeignet herausgestellt.

Wenn im Brennerkörper ein Anschluss für den Zulauf eines Kühlfluids und ein Anschluss für den Ablauf des Kühlfluids angeordnet ist, welche über einen in der Gasdüse angeordneten Kühlkanal miteinander verbunden sind, kann eine optimale Kühlung der Gasdüse und allenfalls dazwischenliegender Komponenten des Zweidrahtschweißbrenners durchgeführt werden. Als Kühlfluid kommt insbesondere Kühlwasser oder andere Kühlflüssigkeiten zur Anwendung. Die Verwendung von Gasen zur Kühlung des Zweidrahtschweißbrenners ist ebenso denkbar.

Die Düsenstockaufnahmen weisen vorzugsweise jeweils zumindest einen Kühlkanal auf, welcher mit dem Anschluss für den Zulauf des Kühlfluids und dem Anschluss für den Ablauf des Kühlfluids im Brennerkörper verbindbar ist. Auf diese Weise können auch die Düsenstockaufnahmen gekühlt werden. Der Verlauf des Kühlfluids kann derart erfolgen, dass beispielsweise zuerst die Gasdüse und danach die Düsenstockaufnahmen gekühlt werden. Die Reihenfolge des Verlaufs des Kühlfluids kann entsprechend beliebig sein bzw. an die jeweilige Anwendung angepasst werden. Wesentlich ist, dass die Kühlkanäle quasi in Serie hintereinander geschaltet sind. Zur Abdichtung der Kühlkanäle der Düsenstockaufnahmen sind vorzugsweise entsprechende O-Ringe oder dgl. angeordnet.

Wenn auch die Düsenstöcke zumindest einen Kühlkanal aufweisen, welcher mit den Kühlkanälen der Düsenstockaufnahmen verbindbar ist, können auch die Düsenstöcke und bis zu einem gewissen Grad auch die darin angeordneten Kontaktrohre gekühlt und die Wärme besser abgeführt werden. Die Kühlkanäle der Düsenstöcke, Düsenstockaufnahmen und der Gasdüse werden je nach Wunsch seriell miteinander zusammengeschaltet, wobei darauf Rücksicht genommen wird, dass die empfindlicheren Komponenten des Zweidrahtschweißbrenners zuerst vom Kühlfluid durchströmt werden.

Die Düsenstockaufnahmen können in einfacher Weise über Schrauben an den Schnittstellen des Brennerkörpers befestigt werden. Dies stellt eine einfache und kostengünstige Konstruktionsmöglichkeit dar. Die entsprechend gestalteten Schrauben können zum Umrüsten des Zweidrahtschweißbrenners auf einen anderen Winkel zwischen den Kontaktrohren bzw. Schweißdrähten auch relativ rasch geöffnet und wieder geschlossen werden. Natürlich sind auch andere Verbindungsarten wie z.B. werkzeuglos bedienbare Schnellverschlüsse oder dgl., denkbar.

Vorteilhafterweise sind die Düsenstöcke über O-Ringe gegenüber den Düsenstockaufnahmen abgedichtet. Durch derartige O-Ringe kann das Austreten des üblicherweise durch das Innere der Düsenstöcke und Kontaktröhre strömenden Schutzgases verhindert werden. Die O-Ringe sind aus geeignetem elastischen Material hergestellt, das den in einem Schweißbrenner üblicherweise auftretenden Temperaturen standhält.

Gemäß einem weiteren Merkmal der Erfindung ist ein Gasverteiler mit zwei Öffnungen für die Aufnahme der Düsenstöcke und mehreren Löchern zur Führung eines Schutzgases vorgesehen, wobei die Öffnungen zur Aufnahme der Düsenstöcke entsprechend dem Winkel der Öffnungen der Düsenstockaufnahmen zueinander orientiert sind. Ein derartiger Gasverteiler dient dazu, das Schutzgas optimal zu verteilen, sodass an der Mündung der Gasdüse ein gleichmäßiger Schutzgasstrom resultiert, der die Lichtbögen des Zweidrahtschweißbrenners entsprechend umgibt. So wie das Paar zweier Düsenstockaufnahmen ist für jeden gewünschten Winkel der Kompaktrohre bzw. Schweißdrähte zueinander ein eigener Gasverteiler notwendig, der die unterschiedlichen Winkel der Düsenstöcke zueinander entsprechend berücksichtigt.

Der Gasverteiler ist vorzugsweise aus einem geeigneten temperaturbeständigem Kunststoff gebildet.

Wenn am Brennerkörper ein schwenkbarer Fixierbügel zur werkzeuglosen Befestigung der Gasdüse vorgesehen ist, kann die Gasdüse besonders einfach und rasch vom Brennerkörper entfernt werden, um die dahinter liegenden Komponenten, wie z.B. die Düsenstockaufnahmen, Düsenstöcke, Kompaktrohre und den Gasverteiler, einfach tauschen zu können. In der verschlossenen Position sollte der Fixierbügel entsprechend einrasten, um ein ungewolltes Lösen der Gasdüse vom Brennerkörper verhindern zu können.

Die Gasdüse kann zweiteilig ausgebildet sein und einen Gasdüsengrundkörper und ein damit lösbar verbundenes Gasdüsenmundstück aufweisen. Auf diese Weise kann der den Lichtbögen zugewandte Teil der Gasdüse, das Gasdüsenmundstück, welches einem höheren Verschleiß ausgesetzt ist, öfter getauscht werden, wohingegen der Gasdüsengrundkörper länger eingesetzt werden kann. Darüber hinaus ist durch die zweiteilige Ausbildung der Gasdüse eine Herstellung der einzelnen Teile aus unterschiedlichem Material möglich. Die Kühlung der Gasdüse durch einen entsprechenden Kühlkanal kann so erfolgen, dass der Kühlkanal in der Trennebene zwischen Gasdüsengrundkörper und Gasdüsenmundstück angeordnet ist und bei entsprechend zusammengebauter Gasdüse beide Teile gekühlt werden können.

Dabei ist das Gasdüsenmundstück vorzugsweise über einen Drahtbügel mit dem Gasdüsengrundkörper lösbar verbunden. Durch diese Maßnahme kann ein rascher und einfacher Tausch des Gasdüsenmundstücks, welches üblicherweise rascher verschleißt, durchgeführt werden.

Das der Gasdüse zugewandte Ende des Brennerkörpers weist einen im Wesentlichen rechteckigen Querschnitt auf und das dem Anschluss für das Schlauchpaket zugewandte Ende des Brennerkörpers weist einen im Wesentlichen runden Querschnitt auf. Diese Bauweise des Brennerkörpers ist hinsichtlich der Bedienung des Zweidrahtschweißbrenners vorteilhaft. Der rechteckige Querschnitt des freien Endes des Zweidrahtschweißbrenners kann je nach Ausführung des Zweidrahtschweißbrenners quer oder hochkant angeordnet sein, sodass die beiden Kontaktrohre während der Schweißung entweder nebeneinander oder hintereinander angeordnet sind. Auf diese Weise können entweder breite Schweißnähte zur Überbrückung breiter Spalte zwischen Werkstücken oder schmälere und tiefere Schweißdrähte gebildet werden.

Der Brennerkörper kann beispielsweise aus Epoxidharz gebildet sein. Dieses Material hat sich zur Herstellung von Schweißbrennern besonders geeignet und weist eine ausreichende Temperaturbeständigkeit auf. Natürlich sind auch andere isolierende Materialien möglich.

Die Erfindung wird auch durch ein oben genanntes Paar von Düsenstockaufnahmen für einen oben genannten Zweidrahtschweißbrenner gelöst, wobei jeweils eine Öffnung für die Aufnahme jeweils eines Düsenstocks vorgesehen ist, welche Öffnungen in einem Winkel zwischen 0° und 20° zueinander angeordnet sind, sodass die Mittelachsen der Kontaktrohre bzw. die darin verlaufenden Schweißdrähte diesen Winkel zueinander einschließen. Somit kann durch den Kauf und die Lagerung verschiedener Düsenstockaufnahmepaare und allenfalls den dazu gehörenden Gasverteilern ein Set von Zweidrahtschweißbrennern für verschiedene Schweißaufgaben zur Verfügung gestellt werden, ohne dass sämtliche Komponenten des Zweidrahtschweißbrenners doppelt oder mehrfach erworben werden müssen. Zu den dadurch erzielbaren Vorteilen wird auf die obige Beschreibung des Zweidrahtschweißbrenners verwiesen.

In jeder Düsenstockaufnahme ist vorzugsweise ein Kanal zur Führung eines Kühlfluids angeordnet. Auf diese Weise kann eine optimale Kühlung auch der Düsenstockaufnahmen sowie der darin angeordneten Düsenstöcke und Kontaktrohre erfolgen und die Wärme entsprechend abgeführt werden.

Die Erfindung wird anhand der beigefügten Zeichnungen näher erläutert. Darin zeigen
- Fig. 1: eine Ansicht auf eine Ausführungsform eines Zweidrahtschweißbrenners gemäß der vorliegenden Erfindung;
- Fig. 2: eine Ansicht auf das für eine Verbindung mit einem entsprechenden Schlauchpaket ausgebildete Ende des Zweidrahtschweißbrenners gemäß Fig. 1;
- Fig. 3: eine Explosionsdarstellung des Zweidrahtschweißbrenners gemäß Fig. 1;
- Fig. 4: ein Schnittbild durch einen Teil des vorderen Endes des Zweidrahtschweißbrenners gemäß Fig. 1;
- Fig. 5: ein Schnittbild des vorderen Endes des Zweidrahtschweißbrenners; und
- Fig. 6A bis 6D: verschiedene Ausführungsformen der erfindungsgemäßen Düsenstockaufnahmen und Gasverteiler eines Zweidrahtschweißbrenners gemäß Fig. 1.

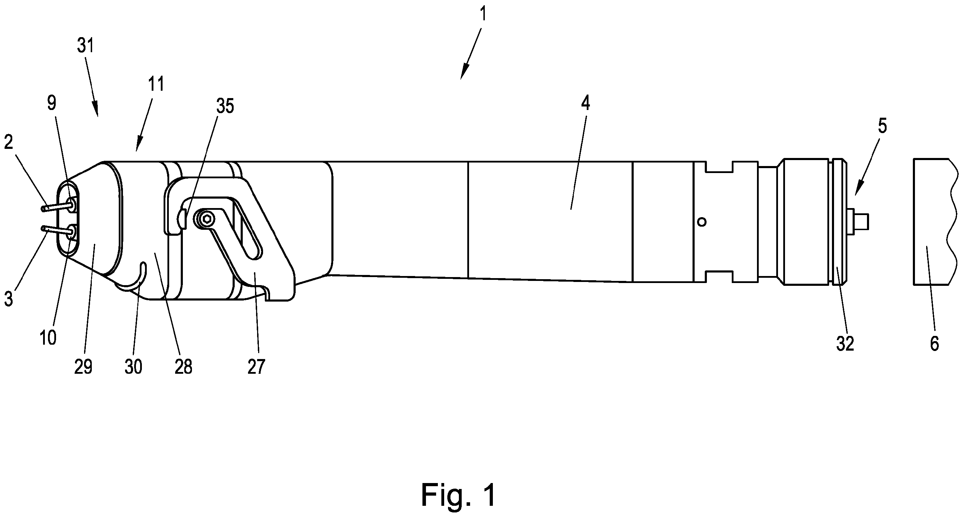

In Fig. 1 ist eine Ausführungsform eines Zweidrahtschweißbrenners 1 gemäß der vorliegenden Erfindung dargestellt. Der Zweidrahtschweißbrenner 1 umfasst einen Brennerkörper 4 mit einem Anschluss 5 für ein Schlauchpaket 6, welches die entsprechenden elektrischen Zuführungen für die Schweißdrähte 2, 3 und das Schutzgas sowie allfällige Steuerleitungen (nicht dargestellt) enthält. Die Verbindung zwischen dem Anschluss 5 für das dem Schlauchpaket 6 zugewandten Ende 32 des Brennerkörpers 4 und dem Schlauchpaket 6 erfolgt üblicherweise durch eine entsprechende Steckverbindung, die besonders rasch und einfach angeschlossen und wieder demontiert werden kann. Der Zweidrahtschweißbrenner 1 weist am anderen Ende 31 eine Gasdüse 11 auf, welche über einen schwenkbaren Fixierbügel 27 am Brennerkörper 4 befestigt werden kann. Der Zweidrahtschweißbrenner 1 beinhaltet zwei Kompaktrohre 9, 10 zur Führung zweier Schweißdrähte 2, 3. Mithilfe eines derartigen Zweidrahtschweißbrenners 1 können Schweißungen mit höherer Abschmelzleistung hergestellt werden. Die Gasdüse 11 ist im dargestellten Ausführungsbeispiel zweiteilig ausgebildet und besteht aus einem Gasdüsengrundkörper 28 und einem Gasdüsenmundstück 29, welche über einen Drahtbügel 30 miteinander verbunden sind.

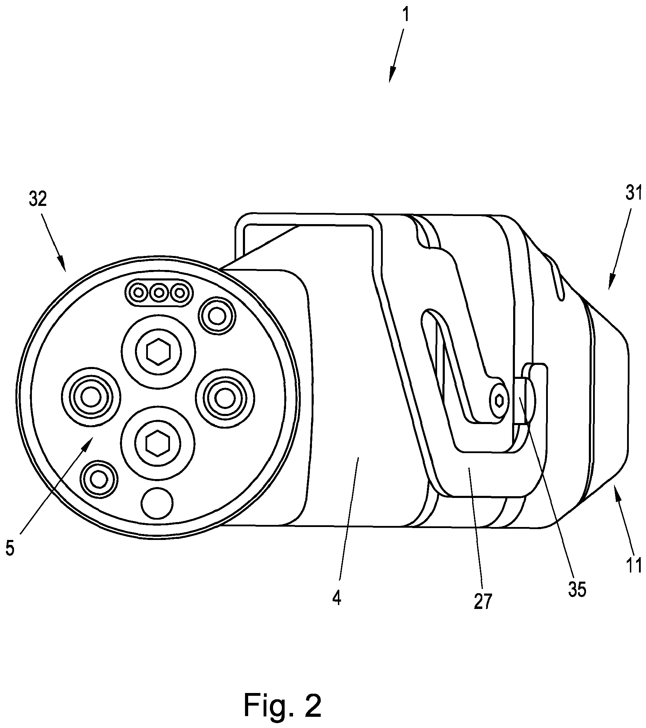

Fig. 2 zeigt eine Ansicht auf das für eine Verbindung mit einem entsprechenden Schlauchpaket 6 ausgebildete Ende 32 des Zweidrahtschweißbrenners 1 gemäß Fig. 1. In dieser Ansicht des Zweidrahtschweißbrenners erkennt man das im Wesentlichen rund ausgebildete Ende 32 des Zweidrahtschweißbrenners 1 bzw. den Anschluss 5 zur Verbindung mit einem Schlauchpaket 6 (s. Fig. 1). Der Anschluss 5 beinhaltet die elektrischen Anschlüsse zur Übertragung des Schweißstroms an die die Schweißdrähte 2, 3 führenden Kontaktrohre 9, 10, Zuleitungen und Ableitungen für ein Kühlfluid, Steuerleitungen sowie Anschlüsse zur Übermittlung eines Schutzgases.

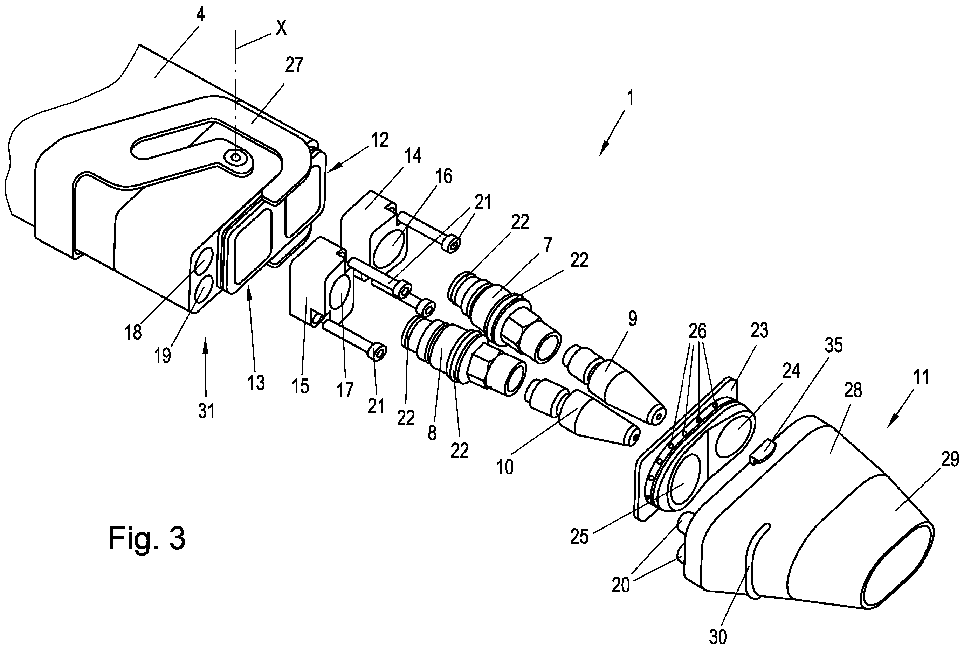

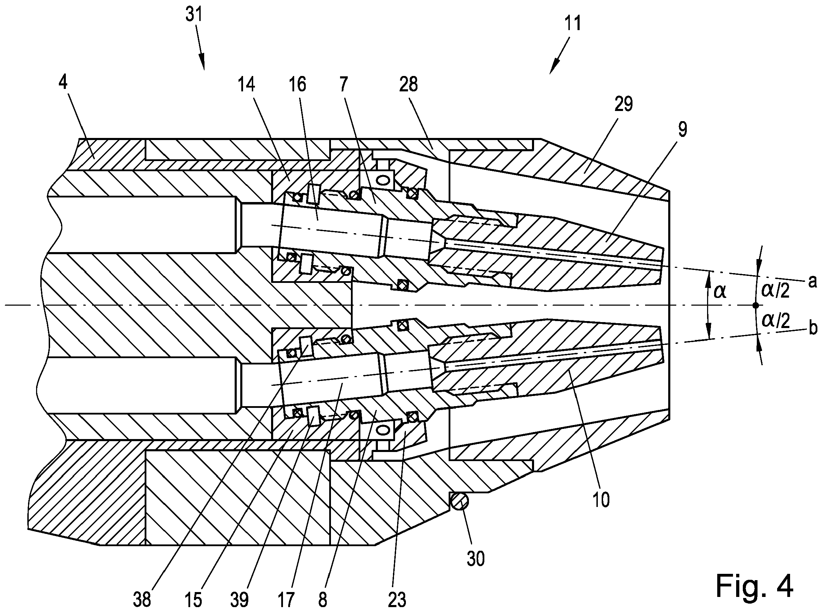

Aus der Explosionsdarstellung des Zweidrahtschweißbrenners 1 gemäß Fig. 3 sind die Einzelteile besser ersichtlich. In dieser Darstellung sind die wesentlichen Komponenten des gegenständlichen Zweidrahtschweißbrenners 1 erkennbar. Demgemäß weist der Brennerkörper 4 an dem der Gasdüse zugewandten Ende 31, welches vorzugsweise rechteckigen Querschnitt aufweist, zwei Schnittstellen 12, 13 zur Aufnahme zweier Düsenstockaufnahmen 14, 15 auf, welche Düsenstockaufnahmen als Einsätze auswechselbar ausgebildet sind. Die Düsenstockaufnahmen 14, 15 können beispielsweise über Schrauben 21 mit den Schnittstellen 12 bzw. 13 verbunden werden. Die Düsenstockaufnahmen 14, 15 weisen jeweils eine Öffnung 16, 17 für die Aufnahme jeweils eines Düsenstocks 7, 8 auf, welche Öffnungen 16, 17 in einem Winkel α zwischen 0 und 20° zueinander angeordnet sind. Werden die Düsenstöcke 7, 8 und die damit verbindbaren Kontaktrohre 9, 10 in die entsprechenden Öffnungen 16, 17 der Düsenstockaufnahmen 14, 15 angeordnet, so schließen die Mittelachsen a, b der Kontaktrohre 9, 10 bzw. die darin verlaufenden Schweißdrähte 2, 3 zueinander diesen Winkel α ein (s. Fig. 4). Obgleich asymmetrische Konstruktionen denkbar sind, bei welchen die Winkel der Öffnungen 16, 17 der beiden Düsenstockaufnahmen 14, 15 unterschiedlich ausgebildet sein können, ist eine symmetrische Anordnung, bei der die Öffnungen 16, 17 beider Düsenstockaufnahmen 14, 15 symmetrisch zu einer Winkelsymmetralen orientiert sind, üblich. Dadurch können theoretisch die Düsenstockaufnahmen 14, 15 identisch hergestellt und lediglich spiegelverkehrt den Schnittstellen 12 bzw. 13 angeordnet werden. Bei der symmetrischen Anordnung weisen beide Öffnungen 16, 17 der Düsenstockaufnahmen 14, 15 den halben Winkel α/2 zur Winkelsymmetralen auf.

Somit kann durch bloßen Austausch eines Paars an Düsenstockaufnahmen 14, 15 ein neuer Zweidrahtschweißbrenner 1 geschaffen werden mit einem anderen Winkel α der Mittelachsen der Kontaktrohre 9, 10 bzw. der darin verlaufenden Schweißdrähte 2, 3 zueinander. Übliche Winkel betragen 0°, 4°, 8° und 11,5°.

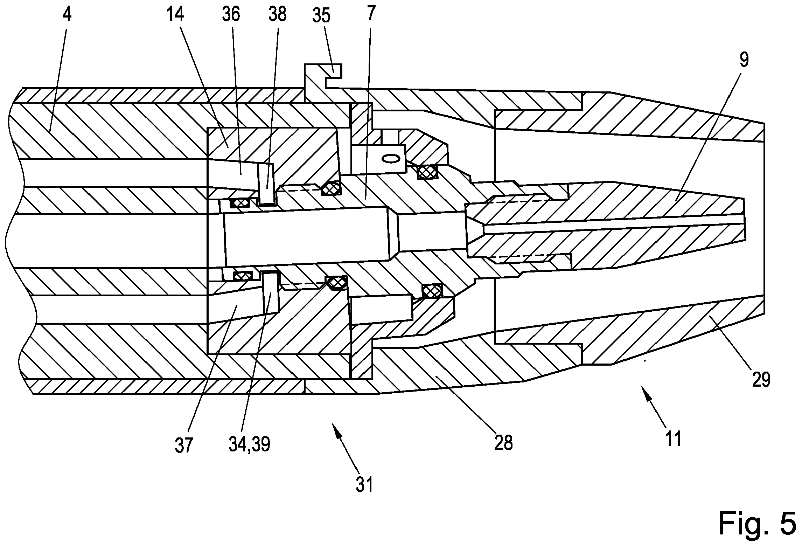

Vorzugsweise sind am Ende 31 des Brennerkörper 4, welcher vorzugsweise rechteckigen Querschnitt aufweist, sowohl ein Anschluss 18 für den Zulauf eines Kühlfluids als auch ein Anschluss 19 für den Ablauf des Kühlfluids angeordnet. Die Anschlüsse 18, 19 sind dabei im Wesentlichen übereinander und seitlich der Schnittstellen 12, 13. Das Ende 31 des Brennerkörpers mit vorzugsweise rechteckigem Querschnitt weist somit die beiden Schnittstellen 12, 13 und einen Bereich für die Anschlüsse 18, 19 des Kühlfluids auf. Über die Anschlüsse 18, 19 wird ein in der Gasdüse 11 angeordneter Kühlkanal 20 mit dem Kühlfluid versorgt und entsprechend lösbar miteinander verbunden. Dazu weisen die Anschlüsse 18, 19 entsprechende Dichtungen und bzw. oder einen sogenannten Fluidstopp (nicht dargestellt) auf, sodass beim Lösen der Verbindung, also beim Abnehmen der Gasdüse 11 vom Brennerkörper 4 ein Austritt des Kühlfluids verhindert wird. Auf diese Weise kann eine optimale Kühlung der Gasdüse 11 erfolgen. Wenn zusätzlich die Düsenstockaufnahme 14, 15 und allenfalls die Düsenstöcke 7, 8 Kühlkanäle 33, 34 aufweisen, können auch diese Komponenten optimal gekühlt werden (s. dazu Fig. 5) .

Wie bereits oben erwähnt, kann die Gasdüse 11 zweiteilig ausgebildet sein und ein Gasdüsenmundstück 29 und einen Gasdüsengrundkörper 28 umfassen, die über einen Drahtbügel 30 miteinander lösbar verbunden werden können. Auf diese Weise kann das rascher verschleißende Gasdüsenmundstück 29 getrennt vom Gasdüsengrundkörper 28 getauscht werden. Die Gasdüse 11 wird vorzugsweise über einen schwenkbaren Fixierbügel 27 werkzeuglos mit dem Brennerkörper 4 verbunden. Der Fixierbügel 27 ist dabei am Ende 31 des Brennerkörpers mit dem vorzugsweise rechteckigen Querschnitt so befestigt, dass er um die Drehachse X verschwenkt werden kann. Zur Fixierung weist die Gasdüse 11 beidseitig entsprechende Vorsprünge 35 auf, welche der Fixierbügel 27 in der fixierten Position entsprechend hält bzw. umschließt.

Zur Erzielung der gewünschten Dichtheit sowohl für das durchströmende Schutzgas als auch das allfällige Kühlfluid sind an verschiedenen Komponenten, insbesondere den Düsenstöcken 7, 8, O-Ringe 22 angeordnet.

Für die optimale Verteilung eines Schutzgases kann ein Gasverteiler 23 mit zwei Öffnungen 24, 25 für die Aufnahme der Düsenstöcke 7, 8 vorgesehen sein. Der Gasverteiler 23, der vorzugsweise aus einem geeigneten temperaturbeständigen Kunststoffmaterial gebildet wird, weist für die Verteilung des Schutzgases entsprechende Löcher 26 auf. Die beiden Öffnungen 24, 25 sind entsprechend den Düsenstockaufnahme 14, 15 in einem Winkel α zueinander orientiert. Somit kann bei Verwendung eines Gasverteilers 23 auch dieser für verschiedene Winkel α bereitgestellt und gegebenenfalls befestigt werden.

Fig. 4 zeigt ein Schnittbild durch einen Teil des vorderen Endes 31 des Zweidrahtschweißbrenners 1. In dieser geschnittenen Darstellung des Endes des Zweidrahtschweißbrenners 1 sind die in einem Winkel angeordneten Öffnungen 16, 17 in den Düsenstockaufnahmen 14, 15 entsprechend erkennbar.

Fig. 5 zeigt ein Schnittbild des vorderen Endes 31 des Zweidrahtschweißbrenners 1. In diesem Schnittbild kann man einen allfälligen Kühlkanal 33 in der Düsenstockaufnahme 14 sowie einen allfälligen Kühlkanal 34 im Düsenstock 7 erkennen. Gemäß einer bevorzugten Ausführungsvariante weist der Kühlkanal 33 in der Düsenstockaufnahme 14 einen Vorlauf 36 und einen Rücklauf 37 auf, welche bevorzugt gegenüberliegend angeordnet und im Wesentlichen als Bohrung ausgebildet sind. Der Vorlauf 36 und der Rücklauf 37 werden über einen umlaufenden Kanal 38 in der Öffnung 16 der Düsenstockaufnahme 14 miteinander verbunden. Der Düsenstock 7, welcher in der Öffnung 16 der Düsenstockaufnahme 14 angeordnet wird, weist eine zu diesem umlaufenden Kanal 38 korrespondierende Nut 39 zur Führung des Kühlfluids auf, welche Nut 27 den Kühlkanal 34 im Düsenstock 7 bildet. Die Düsenstockaufnahme 15 und der Düsenstock 8 sind identisch aufgebaut. Das Kühlfluid verläuft beispielsweise vom Anschluss 18 durch den Kühlkanal 20 in der Gasdüse 11, anschließend durch den Kühlkanal 33 in der Düsenstockaufnahme 15 und dem Düsenstock 8 und danach durch den Kühlkanal 33 in der Düsenstockaufnahme 14 und dem Düsenstock 7, bevor das Kühlfluid über den Anschluss 19 am Ende des Brennerkörpers 4 zurückgeführt wird. Deshalb kann hier von einer Kühlung in Serie gesprochen werden, wobei bevorzugt die heißeste Komponente zuerst gekühlt wird und danach die weiteren Komponenten. In vielen Fällen ist die heißeste Komponente die in Schweißrichtung gesehen vorne angeordnete Düsenstockaufnahme. Je nach Anwendung könnte natürlich auch die Gasdüse 11 die heißeste Komponente sein.

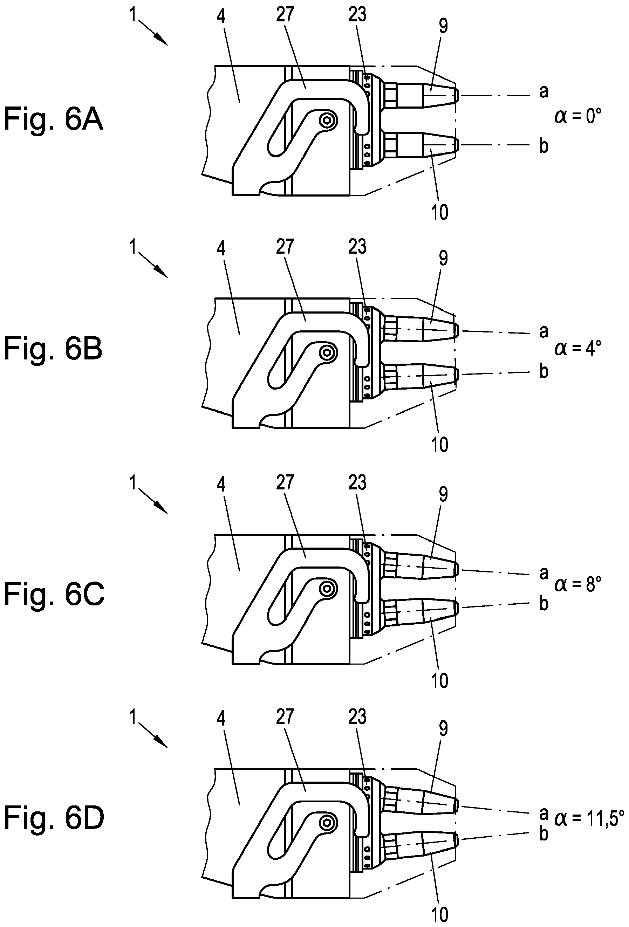

Fig. 6A bis 6D zeigen verschiedene Ausführungsformen der erfindungsgemäßen Düsenstockaufnahmen 14, 15 und Gasverteiler 23 für verschiedene Winkel α der Öffnungen 16, 17 der Düsenstockaufnahmen 14, 15 zueinander. Hier werden verschiedene Ausführungen des Zweidrahtschweißbrenners 1 dargestellt. Bei der Variante gemäß Fig. 6A sind die Düsenstockaufnahmen 14, 15 und der Gasverteiler 23 so gestaltet, dass die beiden Kontaktrohre 9, 10 parallel zueinander angeordnet sind, also in einem Winkel von 0° einschließen. Bei der Variante gemäß Fig. 6B schließen die Kontaktrohre 9, 10 bzw. die darin verlaufenden Schweißdrähte 2, 3 einen Winkel von 4° ein. Bei der Version gemäß Fig. 6C schließen die Kontaktrohr 9, 10 einen Winkel von α=8°, bei der Variante gemäß Fig. 6D einen Winkel von α=11,5° ein. Durch entsprechende Herstellung und Gestaltung der Düsenstockaufnahmen 14, 15 und des allfälligen Gasverteilers 23 können aber auch weitere Winkel realisiert werden, die für bestimmte Schweißverfahren, welche mit dem Zweidrahtschweißbrenner 1 ausgeführt werden, von Vorteil sein könnten.

## Patentansprüche

1. Zweidrahtschweißbrenner (1) für zwei abschmelzende Schweißdrähte (2, 3), mit einem Brennerkörper (4) mit einem Anschluss (5) für ein Schlauchpaket (6) und mit zwei Düsenstockaufnahmen (14, 15) zur Aufnahme jeweils von Düsenstöcken (7, 8) mit darin anordenbaren Kontaktrohren (9, 10) zur Führung der Schweißdrähte (2, 3), und mit einer gemeinsamen Gasdüse (11), **dadurch gekennzeichnet, dass** der Brennerkörper (4) zwei Schnittstellen (12, 13) zur Aufnahme der Düsenstockaufnahmen (14, 15) aufweist, und dass die Düsenstockaufnahmen (14, 15) jeweils eine Öffnung (16, 17) für die Aufnahme jeweils eines Düsenstocks (7, 8) aufweisen, welche Öffnungen (16, 17) in einem Winkel (α) zwischen 0° und 20° zueinander angeordnet sind, sodass die Mittelachsen (a, b) der Kontaktrohre (9, 10) bzw. die darin verlaufenden Schweißdrähte (2, 3) zueinander diesen Winkel (α) einschließen.

2. Zweidrahtschweißbrenner (1) nach Anspruch 1, **dadurch gekennzeichnet, dass** die Öffnungen (16, 17) der Düsenstockaufnahmen (14, 15) symmetrisch zu einer Winkelsymmetralen in dem Winkel (α) zueinander orientiert sind.

3. Zweidrahtschweißbrenner (1) nach Anspruch 1 oder 2, **dadurch gekennzeichnet, dass** mehrere Paare jeweils zweier Düsenstockaufnahmen (14, 15) mit unterschiedlichen Winkeln (α) der Öffnungen (16, 17) zueinander vorgesehen ist, wobei der Winkel (α) vorzugsweise 0°, 4°, 8° und 11,5° beträgt.

4. Zweidrahtschweißbrenner (1) nach einem der Ansprüche 1 bis 3, **dadurch gekennzeichnet, dass** im Brennerkörper (4) ein Anschluss (18) für den Zulauf eines Kühlfluids und ein Anschluss (19) für den Ablauf des Kühlfluids angeordnet ist, welche über einen in der Gasdüse (11) angeordneten Kühlkanal (20) miteinander verbunden sind.

5. Zweidrahtschweißbrenner (1) nach Anspruch 4, **dadurch gekennzeichnet, dass** die Düsenstockaufnahmen (14, 15) jeweils zumindest einen Kühlkanal (33) aufweisen, welcher mit dem Anschluss (18) für den Zulauf des Kühlfluids und dem Anschluss (19) für den Ablauf des Kühlfluids im Brennerkörper (4) verbindbar ist.

6. Zweidrahtschweißbrenner (1) nach Anspruch 5, **dadurch gekennzeichnet, dass** die Düsenstöcke (7, 8) jeweils zumindest einen Kühlkanal (34) aufweisen, welcher mit den Kühlkanälen (33) der Düsenstockaufnahmen (14, 15) verbindbar ist.

7. Zweidrahtschweißbrenner (1) nach einem der Ansprüche 1 bis 6, **dadurch gekennzeichnet, dass** die Düsenstockaufnahmen (14, 15) über Schrauben (21) an den Schnittstellen (12, 13) befestigbar sind.

8. Zweidrahtschweißbrenner (1) nach einem der Ansprüche 1 bis 7, **dadurch gekennzeichnet, dass** die Düsenstöcke (7, 8) über O-Ringe (22) gegenüber den Düsenstockaufnahmen (14, 15) abgedichtet sind.

9. Zweidrahtschweißbrenner (1) nach einem der Ansprüche 1 bis 8, **dadurch gekennzeichnet, dass** ein Gasverteiler (23) mit zwei Öffnungen (24, 25) für die Aufnahme der Düsenstöcke (7, 8) und mehreren Löchern (26) zur Führung eines Schutzgases vorgesehen ist, wobei die Öffnungen (24, 25) zur Aufnahme der Düsenstöcke (7, 8) entsprechend dem Winkel (α) der Öffnungen (16, 17) der Düsenstockaufnahmen (14, 15) zueinander orientiert sind.

10. Zweidrahtschweißbrenner (1) nach einem der Ansprüche 1 bis 9, **dadurch gekennzeichnet, dass** am Brennerkörper (4) ein schwenkbarer Fixierbügel (27) zur werkzeuglosen Befestigung der Gasdüse (11) vorgesehen ist.

11. Zweidrahtschweißbrenner (1) nach einem der Ansprüche 1 bis 10, **dadurch gekennzeichnet, dass** die Gasdüse (11) einen Gasdüsengrundkörper (28) und ein damit lösbar verbundenes Gasdüsenmundstück (29) aufweist.

12. Zweidrahtschweißbrenner (1) nach Anspruch 11, **dadurch gekennzeichnet, dass** das Gasdüsenmundstück (29) über einen Drahtbügel (30) mit dem Gasdüsengrundkörper (28) lösbar verbunden ist.

13. Zweidrahtschweißbrenner (1) nach einem der Ansprüche 1 bis 12, **dadurch gekennzeichnet, dass** das der Gasdüse (11) zugewandte Ende (31) des Brennerkörpers (4) im Wesentlichen rechteckigen Querschnitt und das dem Anschluss (5) für das Schlauchpaket (6) zugewandte Ende (32) des Brennerkörpers i(4) im Wesentlichen runden Querschnitt aufweist.

14. Paar zweier Düsenstockaufnahmen (14, 15) für einen Zweidrahtschweißbrenner (1) nach einem der Ansprüche 1 bis 13 zur Aufnahme von Düsenstöcken (7, 8) mit darin anordenbaren Kontaktrohren (9, 10) zur Führung der Schweißdrähte (2, 3), **dadurch gekennzeichnet, dass** jeweils eine Öffnung (16, 17) für die Aufnahme jeweils eines Düsenstocks (7, 8) vorgesehen ist, welche Öffnungen (16, 17) in einem Winkel (α) zwischen 0° und 20° zueinander angeordnet sind, sodass die Mittelachsen (a, b) der Kontaktrohre (9, 10) bzw. die darin verlaufenden Schweißdrähte (2, 3) zueinander diesen Winkel (α) einschließen.

15. Paar zweier Düsenstockaufnahmen (14, 15) nach Anspruch 13, **dadurch gekennzeichnet, dass** in jeder Düsenstockaufnahme (14, 15) ein Kanal (33) zur Führung eines Kühlfluids angeordnet ist.
